# EUROPEAN PATENT APPLICATION

(11) **EP 4 510 369 A1**
(43) Date of publication of application: **19.02.2025**
(21) Application number: 22946417.7
(22) Date of filing: 22.07.2022
(51) Int. Cl.: H01M 50/547

(54) **BATTERY CELL, BATTERY, AND ELECTRICAL DEVICE**

(30) Priority: 13.06.2022 CN 202221466575 U
(71) Applicant: Contemporary Amperex Technology Co., Limited, Fujian 352100 (CN)
(72) Inventor: XUE, Yifan, Ningde, Fujian 352100 (CN); LIU, Xiaomei, Ningde, Fujian 352100 (CN)
(74) Representative: von Tietzen und Hennig, Nikolaus
(86) International application number: PCT/CN2022/107391
(87) International publication number: WO 2023/240744

(57) **Abstract**

The present disclosure provides a battery cell, battery, and electric device, relating to the field of battery technology. The battery cell comprises a casing, an electrode assembly, and an electrode terminal. The casing comprises a peripheral wall and an end wall, wherein the peripheral wall is arranged around the end wall; along an extension direction of the peripheral wall, at least one end of the peripheral wall is provided with the end wall. The electrode assembly is housed within the casing. The electrode terminal is arranged on the peripheral wall, wherein the electrode terminal is electrically connected to the electrode assembly. In this structure of the battery cell, by arranging the electrode terminal on the peripheral wall and electrically connecting the electrode terminal to the electrode assembly, the input or output of electrical energy for the battery cell is achieved. This structure of the battery cell eliminates the need to arrange end caps and electrode terminals at one end of the battery cell along the axial direction. As a result, it helps save the size of the battery cell along its axial direction, leading to saving space occupied by the battery cell. In turn, it can effectively improve the energy density of the battery cell, which is conducive to improving the performance of the battery cell.

## Description

### Cross-reference to Related Applications

The present disclosure claims the priority to the Chinese patent application with the filling No. 202221466575.9 filed with the Chinese Patent Office on June 13, 2022, and entitled "Battery Cell, Battery, and Electric Device", the contents of which are incorporated herein by reference in entirety.

### Technical Field

The present disclosure relates to the technical field of batteries, in particular to a battery cell, battery, and electric device.

### Background Art

In recent years, new energy vehicles have experienced a leapfrog development. In the field of electric vehicles, power batteries serve as the energy source for electric vehicles and play an irreplaceable important role. With the strong promotion of new energy vehicles, the demand for power battery products is also increasing. Among them, the battery, as the core component of new energy vehicles, has high requirements in terms of performance and safety. The battery cell of the battery is assembled from the positive electrode sheet, negative electrode sheet, and separator through methods such as winding or stacking to form an electrode assembly (bare core). It is then placed into a casing and finally obtained after injecting the electrolyte. However, in the current technology, the occupied space of the battery cell is relatively large, resulting in a lot of wasted space, which leads to a lower energy density of the battery cell. This is not conducive to enhancing the performance of the battery.

### Summary

The embodiments of the present disclosure provide a battery cell, battery, and electric device that effectively enhances the use performance of the battery cell.

In the first aspect, the embodiments of the present disclosure provide a battery cell, comprising a casing, an electrode assembly, and an electrode terminal. The casing comprises a peripheral wall and an end wall, wherein the peripheral wall is arranged around the end wall; along an extension direction of the peripheral wall, at least one end of the peripheral wall is provided with the end wall. The electrode assembly is housed within the casing. The electrode terminal is arranged on the peripheral wall, wherein the electrode terminal is electrically connected to the electrode assembly.

In the above-described technical solution, the casing of the battery cell is provided with an end wall and a peripheral wall, and the peripheral wall is arranged around the end wall. By arranging the electrode terminal on the peripheral wall and electrically connecting the electrode terminal to the electrode assembly, the input or output of electrical energy for the battery cell is achieved. This structure of the battery cell eliminates the need to arrange end caps and electrode terminals at one end of the battery cell along the axial direction. As a result, it helps save the size of the battery cell along its axial direction, leading to saving space occupied by the battery cell. In turn, it can effectively improve the energy density of the battery cell, which is conducive to improving the performance of the battery cell. Furthermore, in batteries with this structure of battery cells, when multiple battery cells are stacked together as a group, the electrode terminals on the peripheral wall of two adjacent battery cells can be pressed against each other to realize the electrical connection among the multiple battery cells, thus eliminating the need for connecting busbar components among multiple battery cells. It is advantageous to reduce the difficulty of assembling the multiple battery cells, enhance the efficiency of grouping the multiple battery cells, and contribute to saving internal space of the battery.

In some embodiments, the peripheral wall comprises a first portion and a second portion which are separately arranged. The first portion and the second portion are arranged along a first direction and are interconnected to jointly accommodate the electrode assembly. The first direction is perpendicular to the extension direction of the peripheral wall.

In the above-described technical solution, the peripheral wall comprises a first portion and a second portion which are separately arranged, meaning that the peripheral wall is formed by enclosing two portions. By arranging the first portion and the second portion along the first direction and connecting them to each other, it is possible to create a peripheral wall suitable for accommodating the electrode assembly. This type of structure of the peripheral wall makes it easier to assemble the electrode terminals onto the peripheral wall during the manufacturing process, thus reducing the manufacturing complexity between the electrode terminals and the peripheral wall.

In some embodiments, along the extension direction of the peripheral wall, both ends of the peripheral wall are provided with the end wall. The two end walls are connected to the first portion, respectively. The two end walls, together with the first portion, define an accommodating space with an opening. The accommodating space is configured for accommodating the electrode assembly. The second portion is capped over the opening.

In the above-described technical solution, the first portion of the peripheral wall is connected to the two end walls to form an accommodating space with an opening on one side, allowing the electrode assembly to be accommodated within the accommodating space. Moreover, by capping the opening with the second portion, the opening can be closed, thus realizing the assembly of the battery cell. This structure of the casing allows the electrode assembly to enter the casing from the peripheral wall of the casing, facilitating the interconnection between the electrode terminals and the electrode assembly. Therefore, it reduces the difficulty of connecting the electrode terminals to the electrode assembly.

In some embodiments, the first portion and the two end walls are an integrally molded structure.

In the above-described technical solution, by forming the first portion and the two end walls as an integrally molded structure, a hollow structure with an opening on one side is created. The use of the casing structure is advantageous for optimizing the production process of the battery cell, leading to increased production efficiency.

In some embodiments, the electrode terminal is arranged on the second portion.

In the above-described technical solution, by arranging the electrode terminal on the second portion of the peripheral wall, this structure of the battery cell, on the one hand, is advantageous in that it is easy to assemble the electrode terminal on the peripheral wall with low assembly difficulty. On the other hand, when the second portion is capped over the opening of the accommodating space, it facilitates the interconnection between the electrode terminal and the electrode assembly, thereby reducing the difficulty of assembly between the electrode terminal and the electrode assembly.

In some embodiments, the peripheral wall is a polygonal prism.

In the above-described technical solution, setting the peripheral wall as a polygonal prism structure means that the casing of the battery cell is a polygonal prism structure. The use of this structure of the battery cell is advantageous in that, on one hand, it facilitates converting an external gap among the multiple battery cells into an internal liquid filling space of the battery cells after the multiple battery cells are stacked into a group. On the other hand, it is beneficial to enhance the structural strength of the battery cell in order to reduce the risk of failure of the battery cell due to expansion and deformation, which can effectively improve the cycle life and safety of the battery cell.

In some embodiments, the peripheral wall is a hexagonal prism.

In the above technical solution, by designing the peripheral wall as a hexagonal prism structure, the casing of the battery cell is a hexagonal prism structure, and this design is easy to manufacture and facilitates stacking multiple battery cells when the multiple battery cells are grouped together.

In some embodiments, the battery cell further comprises a current collector component. The current collector component is arranged inside the casing, and the current collector component is connected to the electrode assembly and the electrode terminal, for achieving an electrical connection between the electrode assembly and the electrode terminal.

In the above-described technical solution, the battery cell further comprises a current collector component, wherein the current collector component is connected between the electrode terminal and the electrode assembly to achieve an electrical connection between the electrode terminal and the electrode assembly. This structure of the battery cell is advantageous in reducing the difficulty of electrical connection between the electrode terminal and the electrode assembly, and it is easy to assemble.

In some embodiments, the electrode assembly comprises a main body part and a tab. Along the extension direction of the peripheral wall, the tab protrudes from one end of the main body part. The current collector component comprises a first connecting body and a second connecting body which are mutually connected. Along the extension direction of the peripheral wall, the first connecting body is located between the end wall and the tab and is connected to the tab, and the second connecting body is located between the main body part and the peripheral wall and is connected to the electrode terminal.

In the above-described technical solution, the current collector component is provided with a first connecting body and a second connecting body which are mutually connected. By arranging the first connecting body between the tab of the electrode assembly and the end wall of the casing, and connecting it to the tab, and by arranging the second connecting body between the main body part of the electrode assembly and the peripheral wall of the casing, and connecting it to the electrode terminal, the electrical connection between the tab and the electrode terminal is achieved. This structure of the battery cell allows for the tab located at one end of the main body part to be connected to the electrode terminal arranged on the peripheral wall, which simplifies the difficulty of assembly between the tab and the electrode terminal.

In some embodiments, a connecting part protrudes from a side of the second connecting body facing the electrode terminal, and the connecting part is connected to the electrode terminal.

In the above-mentioned technical solution, by arranging a connecting part on a side of the second connecting body facing the electrode terminal for connection with the electrode terminal and the connecting part protruding on the second connecting body, it is advantageous to increase the thickness of the region of the second connecting body used for connection with the electrode terminal. Therefore, the stability and reliability of the connection between the second connecting body and the electrode terminal are improved. Additionally, it helps increase the contact area between the second connecting body and the electrode terminal, thus reducing the contact resistance between the second connecting body and the electrode terminal.

In some embodiments, the battery cell also comprises a separating member. The separating member is arranged between the current collector component and the casing, so as to separate the current collector component from the casing.

In the above-described technical solution, by arranging a separating member between the current collector component and the casing, it is enabled that the separating member serves to separate the current collector component from the casing, thus providing a certain level of protection for the current collector component. This reduces the risk of collisions between the current collector component and the casing, thus enhancing the lifespan of the battery cell.

In some embodiments, the battery cell comprises the two electrode terminals. Both of the two electrode terminals are arranged on the peripheral wall, and the two electrode terminals have opposite polarities.

In the above-described technical solution, by arranging two electrode terminals of the battery cell with opposite polarities on the peripheral wall of the casing, it is advantageous to further save the size of the battery cell in its axial direction to save space occupied by the battery cell, thereby increasing the energy density of the battery cell and enhancing the performance of the battery cell.

In the second aspect, the embodiments of the present disclosure provide a battery cell, comprising the multiple battery cells described above.

In some embodiments, the electrode terminals of two adjacent battery cells are pressed against each other to realize the electrical connection between the two battery cells.

In the above technical solution, when multiple battery cells are stacked together as a group, the electrode terminals on the peripheral wall of two adjacent battery cells can be pressed against each other to realize the electrical connection among the multiple battery cells, thus eliminating the need for connecting busbar components among multiple battery cells. It is advantageous to reduce the difficulty of assembling the multiple battery cells, enhance the efficiency of grouping the multiple battery cells, and contribute to saving internal space of the battery, thus increasing the energy density of the battery. In addition, as the two adjacent battery cells are pressed against each other by the electrode terminals, a gap exists between the casings of the two adjacent battery cells, so that a certain expansion space can be provided for the battery cells in the process of use, which in turn is conducive to improving the dynamics performance of the battery.

In the third aspect, the embodiments of the present disclosure further provide an electric device comprising the battery as described above, wherein the battery is configured to provide electrical energy.

### Brief Description of Drawings

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 is a schematic diagram of a structure of a vehicle provided in some embodiments of the present disclosure;
FIG. 2 is an exploded view of the structure of a battery provided in some embodiments of the present disclosure;
FIG. 3 is a schematic diagram of a structure of a battery cell provided in some embodiments of the present disclosure;
FIG. 4 is an exploded view of the structure of the battery cell provided in some embodiments of the present disclosure;
FIG. 5 is an exploded view of the structure of a casing provided in some embodiments of the present disclosure;
FIG. 6 is a sectional view of the casing provided in some embodiments of the present disclosure;
FIG. 7 is a schematic diagram of a localized structure of the battery cell provided in some embodiments of the present disclosure;
FIG. 8 is a schematic diagram of a connection between an electrode assembly and a current collector component provided in some embodiments of the present disclosure;
FIG. 9 is a schematic diagram of a structure of a current collector component provided in some embodiments of the present disclosure;
FIG. 10 is a schematic diagram of a structure of a separating member provided in some embodiments of the present disclosure; and
FIG. 11 is a top view of multiple battery cells interconnected as provided in some embodiments of the present disclosure.

Reference numerals: 1000- vehicle; 100- battery; 10- box; 11- first box body; 12- second box body; 20- battery cell; 21- casing; 211- peripheral wall; 2111- mounting hole; 2112- first portion; 2113- second portion; 2114- side wall; 212- end wall; 213- accommodating space; 214-opening; 22- electrode assembly; 221- tab; 222- main body part; 23- electrode terminal; 24-pressure relief mechanism; 25- current collector component; 251- first connecting body; 252-second connecting body; 2521- connecting part; 26- separating member; 261- first separating body; 262- second separating body; 2621- through-hole; 200- controller; 300- motor; X- an extension direction of the peripheral wall; Y- first direction.

### Detailed Description of Embodiments

In order to make the objective, technical solution, and advantages of the embodiments of the present disclosure clearer, the following will provide a clear and complete description of the technical solution in the embodiments of the present disclosure, in conjunction with the accompanying drawings in the embodiments of the present disclosure. Obviously, the described embodiments are only a part of the embodiments of the present disclosure, rather than all embodiments. Based on the embodiments in the present disclosure, all other embodiments obtained by those of ordinary skill in the art without making creative efforts are within the scope of protection of the present disclosure.

Unless otherwise defined, all technical and scientific terms used herein have the same meaning as understood by those skilled in the art of the relevant technical field. The terms used in the summary of the present disclosure are used for the purpose of describing specific embodiments and are not intended to limit the present disclosure. The terms "comprise" and "provide" and their variations, as well as any other variations, are intended to cover non-exclusive inclusion in the summary and the claims of the present disclosure, as well as in the drawings. The terms "first", "second", etc., used in the summary and claims of the present disclosure, or in the above drawings, are used to distinguish between different objects and are not intended to describe a specific sequence or hierarchy.

The term "embodiment" used in the present disclosure means that specific features, structures, or characteristics described in conjunction with the embodiment can be included in at least one embodiment of the present disclosure. The use of this phrase in various parts of the summary does not necessarily refer to the same embodiment, nor does it imply that these embodiments are mutually exclusive or independent of each other.

In the description of the present disclosure, it should be noted that, unless otherwise clearly stipulated and limited, the terms "mount", "interconnect", "connect" and "attach" should be understood in a broad sense, for example, it can be a fixed connection, a detachable connection, or an integral connection, and it can be a direct connection, an indirect connection through an intermediary, or an internal communication between two components. Those of ordinary skill in the art can understand the meanings of the above terms in the present disclosure according to specific situations.

In the present disclosure, the term "and/or" is used as a way to describe the relationship between associated objects, indicating that there can be three possible relationships. For example, "A and/or B" can represent: the presence of A, the presence of both A and B, or the presence of B. Additionally, the character "/" in the present disclosure generally represents an "or" relationship between the preceding and following associated objects.

In the embodiments of the present disclosure, identical reference numerals indicate the same components. For the sake of conciseness, detailed explanations of the same components are omitted in different embodiments. It should be understood that the dimensions such as thickness, length, and width of various components in the embodiments of the present disclosure as shown in the drawings, as well as the overall dimensions such as thickness, length, and width of the integrated device, are provided as illustrative examples and should not be construed to limit the scope of the present disclosure.

In the present disclosure, the term "multiple/a plurality of" refers to two or more (including two).

In the present disclosure, the battery cell can comprise various types of batteries such as lithium-ion secondary batteries, lithium-ion primary batteries, lithium-sulfur batteries, sodium-ion batteries, sodium-ion batteries, magnesium-ion batteries, etc. The embodiments of the present disclosure are not limited to any specific type of battery. The battery cell can have various shapes such as cylindrical, flat, rectangular, or other shapes. The embodiments of the present disclosure do not impose limitations on this aspect either. The battery cells are generally categorized into three packaging types: cylindrical battery cells, prismatic battery cells, and pouch battery cells. The embodiments of the present disclosure do not impose limitations in this regard either.

The batteries mentioned in the embodiments of the present disclosure refer to a single physical module that comprises one or multiple battery cells to provide higher voltage and capacity. For example, the batteries mentioned in the present disclosure can comprise battery modules or battery packs, and so on. A battery generally comprises a box for encapsulating one or more battery cells or multiple battery modules. The box helps to prevent liquids or other foreign substances from affecting the charging or discharging of the battery cells.

The battery cell comprises a casing, an electrode assembly, and an electrolyte, and the casing is configured to accommodate the electrode assembly and the electrolyte. The electrode assembly is composed of a positive electrode sheet, a negative electrode sheet, and a separator. The operation of the battery cell relies on the movement of metal ions between the positive electrode sheet and the negative electrode sheet. The positive electrode sheet comprises a positive electrode current collector and a positive electrode active material layer. The positive electrode active material layer is coated on the surface of the positive electrode current collector. The portion of the positive electrode current collector that is not coated with the positive electrode active material layer serves as the positive electrode tab, thereby enabling the input or output of electrical energy for the positive electrode sheet through the positive electrode tab. In the case of lithium-ion batteries, the material for the positive electrode current collector can be aluminum, and the positive active material can be lithium cobalt oxide, lithium iron phosphate, lithium manganese oxide, or lithium nickel cobalt manganese oxide, and so on. The negative electrode sheet comprises a negative electrode current collector and a negative electrode active material layer. The negative electrode active material layer is coated on the surface of the negative electrode current collector. The portion of the negative electrode current collector that is not coated with the negative electrode active material layer serves as the negative electrode tab, thereby enabling the input or output of electrical energy for the negative electrode sheet through the negative electrode tab. The material of the negative electrode current collector can be copper, and the active material of the negative electrode can be carbon or silicon, and so on. To ensure that there is no fusing during high current flow, multiple positive electrode tabs are stacked together, as well as multiple negative electrode tabs are stacked together.

The material of the separator can be PP (polypropylene), PE (polyethylene), and so on. Furthermore, the electrode assembly can be a wound structure or a stacked structure. The embodiments of the present disclosure are not limited herein.

Batteries have prominent advantages such as high energy density, low environmental pollution, high power density, long service life, broad applicability, and low self-discharge coefficient. They are an important component of the current development of new energy sources. The battery cell of the battery is assembled from the positive electrode sheet, the negative electrode sheet, and the separator through methods such as winding or stacking to form an electrode assembly (bare core). It is then placed into a casing and finally obtained after injecting the electrolyte. However, with the continuous development of battery technology, higher demands have been placed on the energy density and performance of batteries.

Inventors have found that in traditional batteries, cylindrical battery cells are often used. They have advantages such as compact size, good heat dissipation, high automation, and nice consistency. However, these batteries often have significant gaps between multiple battery cells inside, leading to more wasted space inside the battery, resulting in lower energy density of the battery. Additionally, the contact area between adjacent battery cells is small, which leads to poor support strength between multiple battery cells, and is not conducive to improving the overall structural strength of the battery. Therefore, in the existing technology, by setting the shell of the battery cell as a polygonal prism structure with an opening on one side, and arranging an end cap at the opening of the shell, the input or output of electric energy in the battery cell is enabled by connecting the end cap and the electrode assembly. This structure of battery cell allows multiple battery cells to fit closely together when grouped, thereby transforming the gaps between the multiple battery cells into the internal space inside the battery cells. As a result, it is possible to increase the volume of electrolyte injected into the battery cell, thereby enhancing the energy density and lifespan of the battery. This design also effectively increases the structural strength between multiple battery cells, thus improving the overall structural integrity of the battery. However, this polygonal prism structure of the battery cell, with both the end cap and electrode terminals arranged at one end of the shell, still occupies a considerable amount of space along its axial direction. Additionally, when multiple battery cells are grouped together, it requires busbar components to achieve electrical connections between these multiple battery cells. It is not conducive to saving internal space within the battery, resulting in a lower energy density of the battery.

Based on the aforementioned considerations, in order to address the issue of low energy density in batteries, which in turn leads to suboptimal battery performance, the inventor, after in-depth research, has designed a battery cell. This battery cell comprises a casing, an electrode assembly, and an electrode terminal. The casing comprises a peripheral wall and an end wall, wherein the peripheral wall is arranged around the end wall; along an extension direction of the peripheral wall, at least one end of the peripheral wall is provided with the end wall. The electrode assembly is contained within the casing. Additionally, the electrode terminal is arranged on the peripheral wall, wherein the electrode terminal is connected to the electrode assembly.

In this structure of the battery cell, the casing of the battery cell is provided with an end wall and a peripheral wall, and the peripheral wall is arranged around the end wall. By arranging the electrode terminal on the peripheral wall and electrically connecting the electrode terminal to the electrode assembly, the input or output of electrical energy for the battery cell is achieved. This structure of the battery cell eliminates the need to arrange end caps and electrode terminals at one end of the battery cell along the axial direction. As a result, it helps save the size of the battery cell along its axial direction, leading to saving space occupied by the battery cell. In turn, it can effectively improve the energy density of the battery cell, which is conducive to improving the performance of the battery cell.

Furthermore, in batteries with this structure of battery cells, when multiple battery cells are grouped, that is to say, when multiple battery cells are arranged in a module with each other, the electrode terminals on the peripheral wall of two adjacent battery cells can be pressed against each other to realize the electrical connection among the multiple battery cells, thus eliminating the need for connecting busbar components among multiple battery cells. It is advantageous to reduce the difficulty of assembling the multiple battery cells, enhance the efficiency of grouping the multiple battery cells, and contribute to saving internal space of the battery.

The battery cell disclosed in the embodiments of the present disclosure can be used in various electric devices, comprising but not limited to vehicles, ships, or aircraft. The power system of the electric device can be formed using the battery cell and battery disclosed in the present disclosure. In this way, it is possible to optimize the space occupied by the battery cell, thus increasing the energy density of the battery cell.

The embodiments of the present disclosure provide an electric device that uses batteries as a power source. The electric device can comprise but is not limited to, mobile phones, tablets, laptops, electric toys, power tools, electric bicycles, electric cars, boats, spacecraft, and more. Electric toys can comprise both stationary and mobile types, such as gaming consoles, electric car toys, electric boat toys, and electric airplane toys, among others. Spacecraft can comprise airplanes, rockets, space shuttles, spacecraft, and so on.

For ease of explanation, the following embodiment will be described using one embodiment of the present disclosure where the electric device is a vehicle 1000 as an example.

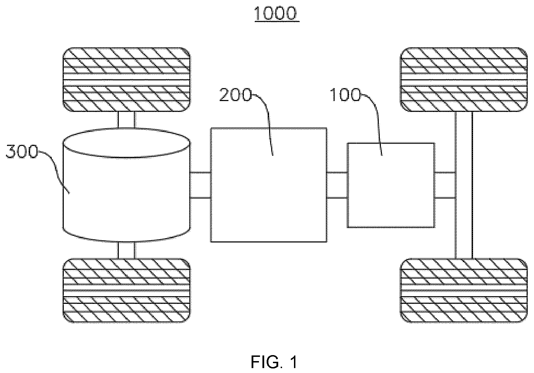

Referring to FIG. 1, FIG. 1 is a schematic diagram of a structure of a vehicle 1000 provided in some embodiments of the present disclosure. The vehicle 1000 can be a gasoline-powered car, a natural gas car, or a new energy vehicle. The new energy vehicles can be pure electric cars, hybrid cars, extended-range cars, etc. A battery 100 is provided inside vehicle 1000, wherein the battery 100 can be arranged at the bottom, front, or rear of the vehicle 1000. The battery 100 is configured to provide power for the vehicle 1000. For instance, the battery 100 can serve as the operational power source for the vehicle 1000. Additionally, the vehicle 1000 also comprises a controller 200 and a motor 300. The controller 200 is configured to manage the supply of power from the battery 100 to the motor 300, e.g., for working power requirements for starting, navigating, and driving the vehicle 1000.

In some embodiments of the present disclosure, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

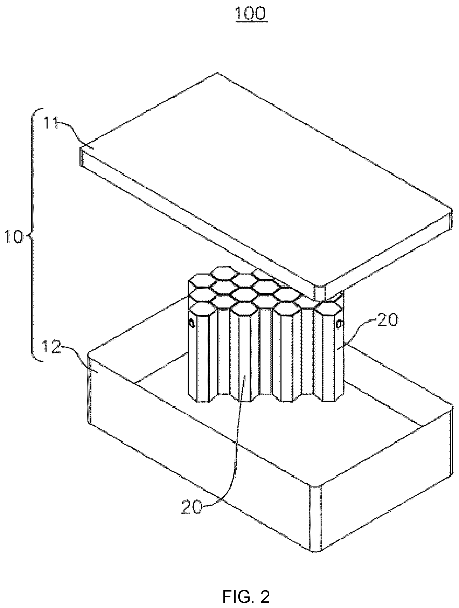

Referring to FIG. 2, FIG. 2 is an exploded view of the structure of a battery 100 provided in some embodiments of the present disclosure. The battery 100 comprises a box 10 and a battery cell 20, wherein the box 20 is configured to contain the battery cell 10. The box 10 is configured to provide an assembly space for the battery cell 20, and the box 10 can be of various structures. In some embodiments, the box 10 can comprise a first box body 11 and a second box body 12, wherein the first box bod 11 and the second box body 12 are fitted together. The first box body 11 and the second box body 12 collectively define an assembly space for accommodating the battery cell 20. The second box body 12 can be a hollow structure open at one end, and the first box body 11 can be a plate-like structure. The first box body 11 is capped over an open side of the second box body 12 so that the first box body 11 and the second box body 12 together define an assembly space. Alternatively, both the first box body 11 and the second box body 12 can be hollow structures open at one end, and an open side of the first box body 11 is capped over an open side of the second box body 12. Of course, the box 10 formed by the first box body 11 and the second box body 12 can be of a variety of shapes, e.g., cylindrical, rectangular, etc.

In the battery 100, the battery cell 20 can be multiple, and the multiple battery cells 20 can be connected in series, parallel, or hybrid. Hybrid connection refers to having both series and parallel connections among multiple battery cells 20. The multiple battery cells 20 can be directly connected in series, parallel, or hybrid, and then the unit composed of these multiple battery cells 20 can be placed inside the box 10. Of course, the battery 100 can also be in the form that, the multiple battery cells 20 can be first connected in series, parallel, or hybrid to form battery modules, and then the multiple battery modules can be connected in series, parallel, or hybrid to form an overall structure, which is accommodated within the box 10. In FIG. 2, it can be observed that multiple battery cells 20 are grouped together and housed inside the box. This means that multiple battery cells 20 are arranged as a module and then placed inside the box.

Each battery cell 20 can be a secondary battery or a primary battery. It can also be a lithium-sulfur battery, sodium-ion battery, magnesium-ion battery, or other types, but is not limited to these.

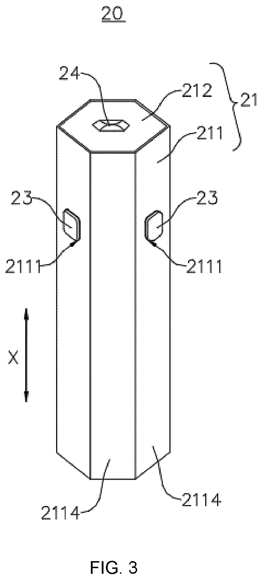

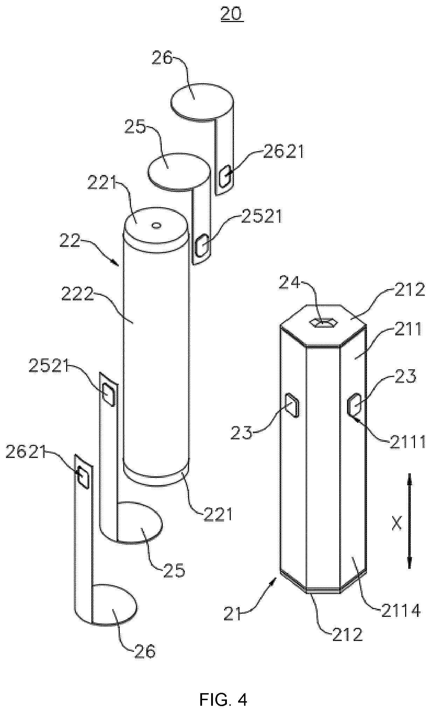

According to some embodiments of the present disclosure, referring to FIG. 3 and FIG. 4, FIG. 3 shows a schematic diagram of the structure of the battery cell 20 provided in some embodiments of the present disclosure, and FIG. 4 shows an exploded view of the structure of the battery cell 20 provided in some embodiments of the present disclosure. The present disclosure provides a battery cell 20, wherein the battery cell 20 comprises a casing 21, an electrode assembly 22, and an electrode terminal 23. The casing 21 comprises a peripheral wall 211 and an end wall 212, wherein the peripheral wall 211 is arranged around the end wall 212; along an extension direction X of the peripheral wall, at least one end of the peripheral wall 211 is provided with the end wall 212. The electrode assembly 22 is contained within the casing 21. Additionally, the electrode terminal 23 is arranged on the peripheral wall 211, wherein the electrode terminal 23 is electrically connected to the electrode assembly 22.

The casing 21 can also be configured to contain an electrolyte, such as an electrolytic solution. The material of the casing 21 can also be diverse, including copper, iron, aluminum, steel, aluminum alloy, and more.

The casing 21 is provided with a peripheral wall 211 and an end wall 212. The peripheral wall 211 is arranged around the end wall 212, which means that the peripheral wall 211 surrounds the edge of the end wall 212 along the circumferential direction of the end wall 212. Therefore, a cylindrical hollow structure with openings at both ends is formed. Additionally, along the extension direction X of the peripheral wall, the end wall 212 is connected to one end of the peripheral wall 211. The extension direction X of the peripheral wall is the axial direction of the cylindrical hollow structure.

At least one end of the peripheral wall 211 is provided with an end wall 212. This means that the peripheral wall 211 can be provided with an end wall 212 at one end, or can be provided with end walls 212 at both ends. For instance, as shown in FIG. 4, both ends of the peripheral wall 211 are provided with end walls 212. That is, the two end walls 212 can seal off the two open ends of the peripheral wall 211, thereby forming a sealed space to accommodate the electrode assembly 22 and the electrolyte.

The electrode assembly 22 is the component within the battery cell 20 where electrochemical reactions occur. The electrode assembly 22 can comprise a positive electrode sheet, a negative electrode sheet, and a separator. The electrode assembly 22 can be in the form of a wound structure formed by winding a positive electrode sheet, a separator, and a negative electrode sheet together. It can also be in the form of a stacked structure formed by layering a positive electrode sheet, a separator, and a negative electrode sheet. For example, in FIG. 4, the electrode assembly 22 is in the form of a wound structure formed by winding a positive electrode sheet, a separator, and a negative electrode sheet together. The electrode assembly 22 is provided with two tabs 221. Respectively, the two tabs 221 are arranged at the two ends of the electrode assembly 22 in the extension direction X of the peripheral wall. The two tabs 221 are respectively the positive electrode tab and the negative electrode tab, with the positive electrode tab and the negative electrode tab serving as the positive output terminal and negative output terminal of the electrode assembly 22, respectively.

Optionally, the shape of the electrode assembly 22 can vary, such as a cylindrical structure or a rectangular structure. Exemplarily, in FIG. 4, the electrode assembly 22 is of a cylindrical structure.

The electrode terminal 23 is a component configured to output the electrical energy of the battery cell 20 and can serve as a positive output terminal or a negative output terminal. The material of the electrode terminal 23 can also be diverse, comprising copper, iron, aluminum, steel, aluminum alloy, and more.

The electrode terminal 23 is configured to connect to the tab 221, thus enabling the input or output of electrical energy for the battery cell 20. The electrode terminal 23 is insulated and mounted on the peripheral wall 211, meaning that the electrode terminal 23 is arranged on the peripheral wall 211 but is not electrically connected to the peripheral wall 211. Optionally, in FIG. 3 and FIG. 4, the peripheral wall 211 is provided with mounting holes 2111 for mounting the electrode terminal 23. The mounting holes 2111 pass through both sides of the peripheral wall 211, and the electrode terminal 23 is inserted through the mounting holes 2111. An insulator is arranged between the electrode terminal 23 and the peripheral wall 211, wherein the insulator is configured to insulate and separate the electrode terminal 23 from the peripheral wall 211 so that the electrode terminal 23 is insulated and mounted on the peripheral wall 211. Exemplarily, the material of the insulator can be rubber, plastic, or silicone, among other materials.

In some embodiments, as shown in FIG. 3, the battery cell 20 can also comprise a pressure relief mechanism 24, wherein the pressure relief mechanism 24 is mounted on the end wall 212 of the casing 21. The pressure relief mechanism 24 is configured to release the internal pressure of the battery cell 20 when the internal pressure or the temperature of the battery cell 20 reaches a predetermined value. It is important to note that the structure of the battery cell 20 is not limited to this. In other embodiments, the pressure relief mechanism 24 can also be mounted on the peripheral wall 211 of the casing 21.

Exemplarily, the pressure relief mechanism 24 can have various components such as explosion-proof valves, burst discs, gas valves, relief valves, or safety valves, among others.

The casing 21 of the battery cell 20 is provided with an end wall 212 and a peripheral wall 211, and the peripheral wall 211 is arranged around the end wall 212. By arranging the electrode terminal 23 on the peripheral wall 211 and electrically connecting the electrode terminal 23 to the electrode assembly 22, the input or output of electrical energy for the battery cell 20 is achieved. This structure of the battery cell 20 eliminates the need to arrange end caps and electrode terminals 23 at one end of the battery cell 20 along the axial direction. As a result, it helps save the size of the battery cell 20 along its axial direction, leading to save space occupied by the battery cell 20. In turn, it can effectively improve the energy density of the battery cell 20, which is conducive to improving the performance of the battery cell 20. Furthermore, in batteries 100 with this structure of battery cells 20, when multiple battery cells 20 are stacked together as a group, the electrode terminals 23 on the peripheral wall 211 of two adjacent battery cells 20 can be pressed against each other to realize the electrical connection among the multiple battery cells 20, thus eliminating the need for connecting busbar components among multiple battery cells 20. It is advantageous to reduce the difficulty of assembling the multiple battery cells 20, enhance the efficiency of grouping the multiple battery cells 20, and contribute to saving internal space within the battery 100.

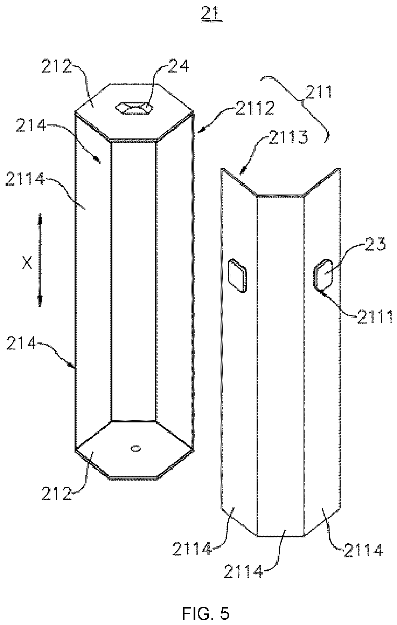

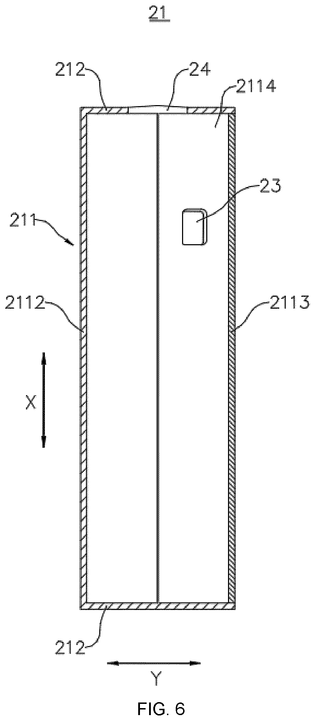

According to some embodiments of the present disclosure, with reference to FIGS. 3 and 4, and with further reference to FIGS. 5 and 6, FIG. 5 is an exploded view of the structure of a casing 21 provided in some embodiments of the present disclosure, and FIG. 6 is a sectional view of the casing 21 provided in some embodiments of the present disclosure. The peripheral wall 211 comprises a first portion 2112 and a second portion 2113 which are separately arranged. The first portion 2112 and the second portion 2113 are arranged along a first direction Y and are interconnected to jointly accommodate the electrode assembly 22. The first direction Y is perpendicular to the extension direction X of the peripheral wall.

The first portion 2112 and the second portion 2113 are separately arranged, meaning that the peripheral wall 211 is formed by two components assembled and connected to each other along the first direction Y. The first portion 2112 and the second portion 2113 are not integrally molded structure. During the assembly of the battery cell 20, the first portion 2112 and the second portion 2113 are connected to each other to enclose and form the peripheral wall 211 of the cylindrical hollow structure with openings at both ends, thus allowing for the accommodation of the electrode assembly 22.

The first direction Y is perpendicular to the extension direction X of the peripheral wall and the first direction Y is the radial direction of the peripheral wall 211. In other words, the first portion 2112, and the second portion 2113 are arranged along the radial direction of the peripheral wall 211.

Exemplarily, the first portion 2112 and the second portion 2113 are arranged along the first direction Y and connected to each other. The connection relationship between the first portion 2112 and the second portion 2113 can be various, such as welding, adhesive bonding, and so on.

The peripheral wall 211 comprises a first portion 2112 and a second portion 2113 which are separately arranged, meaning that the peripheral wall 211 is formed by enclosing two portions. By arranging the first portion 2112 and the second portion 2113 along the first direction Y and connecting them to each other, it is possible to create a peripheral wall 211 suitable for accommodating the electrode assembly 22. This type of structure of peripheral wall 211 makes it easier to assemble the electrode terminals 23 onto the peripheral wall 211 during the manufacturing process, thus reducing the manufacturing complexity between the electrode terminals 23 and the peripheral wall 211.

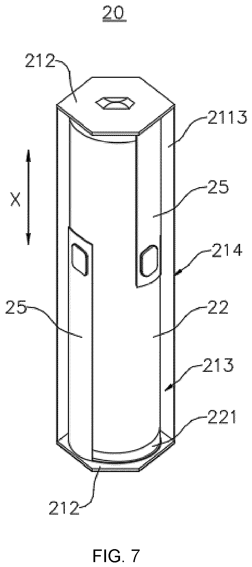

According to some embodiments of the present disclosure, with reference to FIG. 4, FIG. 5, and FIG. 6, and with further reference to FIG. 7, FIG. 7 is a schematic diagram of a localized structure of the battery cell 20 provided in some embodiments of the present disclosure. Along the extension direction X of the peripheral wall, both ends of the peripheral wall 211 are provided with the end wall 212. The two end walls 212 are connected to the first portion 2112, respectively. The two end walls 212, together with the first portion 2112, define an accommodating space 213 with an opening 214. The accommodating space 213 is configured for accommodating the electrode assembly 22. The second portion 2113 is capped over the opening 214.

Two end walls 212, along with the first portion 2112, define an accommodating space 213 with an opening 214. That is to say, the two end walls 212 are respectively arranged at the two ends of the peripheral wall 211 along the extension direction X of the peripheral wall and are connected to the two ends of the first portion 2112 of the peripheral wall 211. This ensures that the first portion 2112 and the two end walls 212 together define an accommodating space 213 for accommodating the electrode assembly 22. Moreover, the opening 214 of the accommodating space 213 is located on one side of the peripheral wall 211 in the first direction Y. In other words, the first portion 2112 and the two end walls 212 together form a hollow structure with an opening 214 on one side in the first direction Y.

During the assembly of the battery cell 20, the electrode assembly 22 can first be placed inside the accommodating space 213 defined jointly by the first portion 2112 and the two end walls 212. Then, the second portion 2113 can be capped over the opening 214 of the accommodating space 213 and form a sealed connection, thus creating a sealed space for accommodating the electrode assembly 22 and the electrolyte. Exemplarily, the second portion 2113 can be welded to the first portion 2112.

Understandably, the structure of battery cell 20 is not limited to the one described above. The battery cell 20 can also be other structures. The casing 21 comprises a shell and an end cap. The shell is a cylindrical hollow structure open at one end, and the end cap is capped over the open end of the shell to form a sealed connection, thereby creating a sealed space for accommodating the electrode assembly 22 and the electrolyte solution. Of course, in some embodiments, the casing 21 can also comprise the shell and two end caps. The shell is a cylindrical hollow structure open at both opposite ends, and one end cap corresponds to be capped over one open end of the shell to form a sealed connection, thereby creating a sealed space for accommodating the electrode assembly 22 and the electrolyte.

By connecting the first portion 2112 of the peripheral wall 211 to the two end walls 212, it forms an accommodating space 213 with an opening 214 on one side, allowing the electrode assembly 22 to be accommodated within the accommodating space 213. Moreover, by capping the opening 214 with the second portion 2113, the opening 214 can be closed, thus realizing the assembly of the battery cell 20. This structure of the casing 21 allows the electrode assembly 22 entering the casing 21 from the peripheral wall 211 of the casing 21, facilitating the interconnection between the electrode terminals 23 and the electrode assembly 22. Therefore, it reduces the difficulty of connecting the electrode terminals 23 to the electrode assembly 22.

According to some embodiments of the present disclosure, referring to FIG. 5 and FIG. 6, the first portion 2112 and the two end walls 212 are integrally molded structures.

The first portion 2112 and the two end walls 212 are integrally molded structures, meaning that the first portion 2112 and the two end walls 212 are formed as a structure that is integrally molded. In other words, the first portion 2112 and the two end walls 212 are manufactured and molded in one piece using a casting process or a stamping process, for example. It should be noted that in other embodiments, the first portion 2112 and the two end walls 212 can also be separate structures; the first portion 2112 and the two end walls 212 can be connected to each other through processes such as welding or adhesive bonding in subsequent processing.

By forming the first portion 2112 and the two end walls 212 as an integrally molded structure, a hollow structure with an opening 214 on one side is created. The use of the casing 21 structure is advantageous for optimizing the production process of the battery cell 20, leading to increased production efficiency.

According to some embodiments of the present disclosure, referring to FIG. 5, the electrode terminal 23 is arranged on the second portion 2113. That is to say, the second portion 2113 is provided with mounting holes 2111 for mounting the electrode terminals 23 so that the electrode terminals 23 can be mounted on the second portion 2113.

Of course, the structure of the battery cell 20 is not limited to this, and in other embodiments, the electrode terminals 23 can also be provided on the first portion 2112 of the peripheral wall 211.

By arranging the electrode terminal 23 on the second portion 2113 of the peripheral wall 211, this structure of the battery cell 20, on the one hand, is advantageous in that it is easy to assemble the electrode terminal 23 on the peripheral wall 211 with low assembly difficulty. On the other hand, when the second portion 2113 is capped over the opening 214 of the accommodating space 213, it facilitates the interconnection between the electrode terminal 23 and the electrode assembly 22, thereby reducing the difficulty of assembly between the electrode terminal 23 and the electrode assembly 22.

According to some embodiments of the present disclosure, with reference to FIG. 3, FIG. 4, and FIG. 5, the peripheral wall 211 is a polygonal prism.

The peripheral wall 211 is a polygonal prism structure, and a polygonal prism is a common three-dimensional polyhedron in geometry, referring to a closed geometric body where the upper and lower bases are parallel and congruent and the lateral ribs are parallel and equal. If the base of the polygonal prism is a polygon, then the polygonal prism is referred to as a polygonal prism structure, meaning it has multiple lateral edges or side walls 2114. The extension direction X of the peripheral wall refers to the extension direction of the central axis of the polygonal prism structure, perpendicular to the radial direction of the polygonal prism structure, wherein the radial direction of the polygonal prism structure is the direction of the radius or diameter of the base of the polygonal prism structure. The circumferential direction of the peripheral wall 211 refers to the direction that surrounds the central axis of the polygonal prism structure. In other words, the multiple side walls 2114 of the peripheral wall 211 encircle the central axis of the polygonal prism structure.

Optionally, the shape of the peripheral wall 211 can be various, such as a triangular prism, a rectangular prism, a pentagonal prism, a hexagonal prism, or a heptagonal prism. In other words, the peripheral wall 211 is of a structure formed by three side walls 2114, four side walls 2114, five side walls 2114, six side walls 2114, seven side walls 2114, and so on.

By setting the peripheral wall 211 as a structure of a polygonal prism, it means that the casing 21 of the battery cell 20 is a polygonal prism structure. The use of this structure of the battery cell 20 is advantageous in that, on one hand, it facilitates converting an external gap among the multiple battery cells 20 into an internal liquid filling space of the battery cells 20 after the multiple battery cells 20 are stacked into a group. On the other hand, it is beneficial to enhance the structural strength of the battery cell 20 in order to reduce the risk of failure of the battery cell 20 due to expansion and deformation, which can effectively improve the cycle life and safety of the battery cell 20.

In some embodiments of the present disclosure, with reference to FIG. 3, FIG. 4, and FIG. 5, the peripheral wall 211 is a hexagonal prism.

The peripheral wall 211 is of a hexagonal prism structure, meaning the peripheral wall 211 is provided with six side walls 2114, and the six side walls 2114 are connected end to end along the circumferential direction of the side wall 211, thus forming a peripheral wall 211 of hexagonal prism structure. However, in some embodiments, the side wall 211 can also take the form of a triangular prism, quadrangular prism, pentagonal prism, or heptagonal prism structure.

In the embodiment where the peripheral wall 211 comprises the separately arranged first portion 2112 and the second portion 2113, for instance, as shown in FIG. 3, the first portion 2112 is provided with three side walls 2114, and the second portion 2113 is provided with three side walls 2114. This allows the first portion 2112 and the second portion 2113, when connected with each other, to form the peripheral wall 211 of the hexagonal prism structure. Of course, in some embodiments, the first portion 2112 can also be provided with two, four, or five side walls 2114, etc.

By designing the peripheral wall 211 as a hexagonal prism structure, that is, the casing 21 of the battery cell 20 is a hexagonal prism structure, this design is easy to manufacture and facilitates stacking multiple battery cells 20 when the multiple battery cells 20 are grouped together.

According to some embodiments of the present disclosure, with reference to FIG. 4 and FIG. 7, the battery cell 20 further comprises a current collector component 25. The current collector component 25 is arranged inside the casing 21, and the current collector component 25 is connected to the electrode assembly 22 and the electrode terminal 23, to achieve an electrical connection between the electrode assembly 22 and the electrode terminal 23.

The current collector component 25 serves to connect the tab 221 and the electrode terminal 23 to establish an electrical connection between the electrode assembly 22 and the electrode terminal 23. The material of the current collector component 25 can be various, such as copper, iron, aluminum, steel, aluminum alloy, etc.

For example, the current collector component 25 is welded to the tab 221 and the current collector component 25 is also welded to the electrode terminal 23, thus achieving an electrical connection between the electrode terminal 23 and the tab 221. Of course, in some embodiments, the current collector component 25 can be pressed against the tab 221, and similarly, the current collector component 25 can be pressed against the electrode terminal 23, thus achieving an electrical connection between the electrode terminal 23 and the tab 221.

It is worth noting that the structure of the current collector component 25 can be various, such as metal sheets or wires.

The battery cell 20 further comprises a current collector component 25, wherein the current collector component 25 is connected between the electrode terminal 23 and the electrode assembly 22 to achieve an electrical connection between the electrode terminal 23 and the electrode assembly 22. This structure of the battery cell 20 is advantageous in reducing the difficulty of electrical connection between the electrode terminal 23 and the electrode assembly 22, and it is easy to assemble.

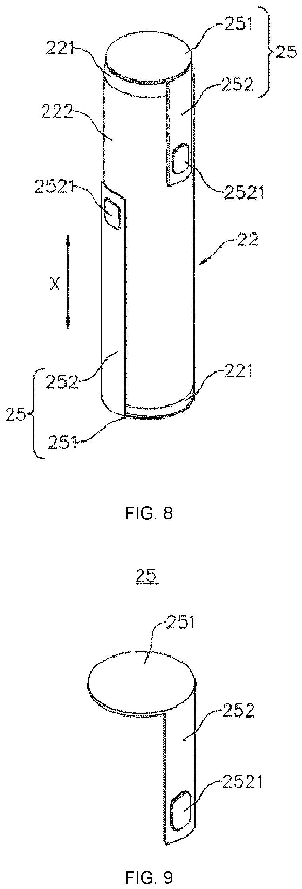

According to some embodiments of the present disclosure, with reference to FIGS. 4 and 7, and with further reference to FIGS. 8 and 9, FIG. 8 is a schematic diagram of a connection between an electrode assembly 22 and a current collector component 25 provided in some embodiments of the present disclosure, FIG. 9 is a schematic diagram of a structure of a current collector component 25 provided in some embodiments of the present disclosure. The electrode assembly 22 comprises a main body part 222 and a tab 221. Along the extension direction X of the peripheral wall, the tab 221 protrudes from one end of the main body part 222. The current collector component 25 comprises a first connecting body 251 and a second connecting body 252 which are mutually connected. Along the extension direction X of the peripheral wall, the first connecting body 251 is located between the end wall 212 and the tab 221 and is connected to the tab 221, and the second connecting body 252 is located between the main body part 222 and the peripheral wall 211 and is connected to the electrode terminal 23.

The electrode assembly 22 is provided with a main body part 222 and a tab 221. The main body part 222 is connected to the tab 221, and the tab 221 protrudes from one end of the main body part 222 in the extension direction X of the peripheral wall. The main body part 222 comprises a region where the positive electrode sheet is coated with an active material layer and a region where the negative electrode sheet is coated with an active material layer, which are stacked or wound to form the main body part. The tab 221 is a region where the positive electrode sheet is not coated with the active material layer or a region where the negative electrode sheet is not coated with the active material layer.

The current collector component 25 comprises a first connecting body 251 and a second connecting body 252 that are interconnected. In other words, the current collector component 25 is formed by connecting these two parts, and the first connecting body 251 and the second connecting body 252 are oriented perpendicular to each other, which allows the first connecting body 251 to be positioned along the extension direction X of the peripheral wall, between the end wall 212 and the tab 221, and be connected to the tab 221. It also enables the second connecting body 252 to be positioned between the main body part 222 and the peripheral wall 211 and connected to the electrode terminal 23.

Optionally, the first connecting body 251 and the second connecting body 252 of the current collector component 25 can both be sheet-like structures. For example, the first connecting body 251 can be a circular sheet-like structure, which enhances the connection area between the first connecting body 251 and the tab 221 of the electrode assembly 22. The second connecting body 252 can be a square sheet-like structure, which facilitates arranging the second connecting body 252 between the main body part 222 and the peripheral wall 211. In other embodiments, the current collector component 25 can be other structures, such as wires arranged inside the casing 21. Two ends of the wires are configured to connect to the tab 221 and the electrode terminals 23, for achieving the electrical connection between the tab 221 and the electrode terminals 23. The first connecting body 251 and the second connecting body 252 can be integrated structures or separated structures. This means that the first connecting body 251 and the second connecting body 252 can be manufactured as a single piece through processes like casting or stamping, or the first connecting body 251 and the second connecting body 252 can be structures that are connected to each other, for example, through welding or clamping.

Exemplarily, as shown in FIG. 8, the electrode assembly 22 is provided with two electrode tabs 221. The two electrode tabs 221 are each protruding at the two ends of the main body part 222 in the extension direction X of the peripheral wall. The two electrode tabs 221 serve as the positive electrode tab and the negative electrode tab of the electrode assembly 22 and respectively serve as the positive output and negative output. In other words, the positive electrode tab is the region of the positive electrode sheet without the active material layer coated, and the negative electrode tab is the region of the negative electrode sheet without the active material layer coated. Correspondingly, there are also two current collector components 25 and two electrode terminals 23, with each current collector component 25 configured to connect one electrode tab 221 and one electrode terminal 23.

The current collector component 25 is provided with a first connecting body 251 and a second connecting body 252 which are mutually connected. By arranging the first connecting body 251 between the tab 221 of the electrode assembly 22 and the end wall 212 of the casing 21, and connecting it to the tab 221, and by arranging the second connecting body 252 between the main body part 222 of the electrode assembly 22 and the peripheral wall 211 of the casing 21, and connecting it to the electrode terminal 23, the electrical connection between the tab 221 and the electrode terminal 23 is achieved. This structure of the battery cell 20 allows for the tab 221 located at one end of the main body part 222 to be connected to the electrode terminal 23 arranged on the peripheral wall 211, which simplifies the difficulty of assembly between the tab 221 and the electrode terminal 23.

According to some embodiments of the present disclosure, with reference to FIG. 8 and FIG. 9, a connecting part 2521 protrudes from a side of the second connecting body 252 facing the electrode terminal 23, and the connecting part 2521 is connected to the electrode terminal 23.

A connecting part 2521 protrudes from a side of the second connecting body 252 facing the electrode terminal 23. In other words, the second connecting body 252 is provided with a protruding structure on a side away from the main body part 222, wherein the protruding structure is a connecting part 2521 for interconnection with the electrode terminal 23.

It is important to note that the connecting part 2521 and the second connecting body 252 can be integrated structures or separated structures. This means that the connecting part 2521 and the second connecting body 252 can be manufactured as a single piece through processes like casting or stamping, or the connecting part 2521 and the second connecting body 252 can be structures that are connected to each other, for example, through welding or clamping.

By arranging a connecting part 2521 on a side of the second connecting body 252 facing the electrode terminal 23 for connection with the electrode terminal 23 and the connecting part 2521 being protruding on the second connecting body 252, it is advantageous to increase the thickness of the region of the second connecting body 252 used for connection with the electrode terminal 23. Therefore, the stability and reliability of the connection between the second connecting body 252 and the electrode terminal 23 are improved. Additionally, it helps increase the contact area between the second connecting body 252 and the electrode terminal 23, thus reducing the contact resistance between the second connecting body 252 and the electrode terminal 23.

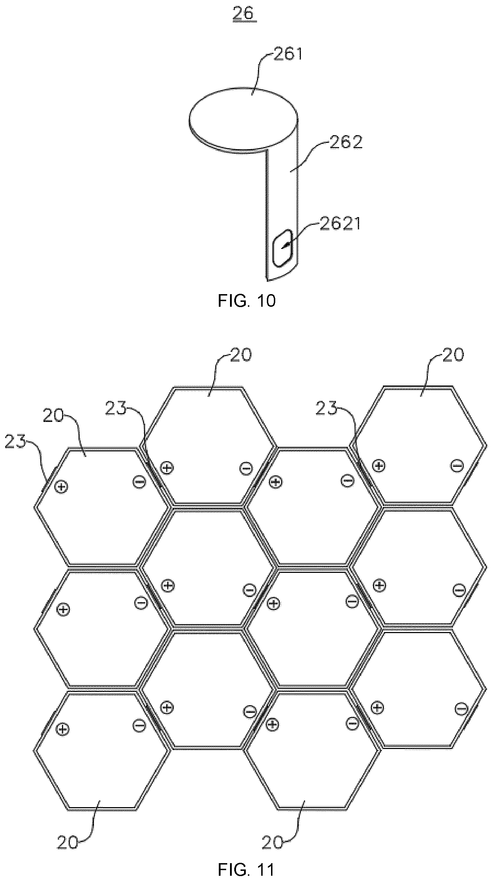

According to some embodiments of the present disclosure, with reference to FIG. 4, and with further reference to FIG. 10, FIG. 10 is a schematic diagram of a structure of a separating member 26 provided in some embodiments of the present disclosure. The battery cell 20 also comprises a separating member 26. The separating member 26 is arranged between the current collector component 25 and the casing 21, so as to separate the current collector component 25 from the casing 21.

The separating member 26 is located between the current collector component 25 and the casing 21, serving to separate the current collector component 25 from the casing 21. This allows the separating member 26 to provide a buffering and protective function between the current collector component 25 and the casing 21.

The separating member 26 comprises a first separating body 261 and a second separating body 262 that are mutually connected and vertically arranged. The first separating body 261 is arranged along the extension direction X of the peripheral wall between the first connecting body 251 of the current collector component 25 and the end wall 212 of the casing 21, thus separating the first connecting body 251 from the end wall 212. The second separating body 262 is arranged between the second connecting body 252 of the current collector component 25 and the peripheral wall 211 of the casing 21, thus separating the second connecting body 252 from the peripheral wall 211. Thereby, the separation between the current collector component 25 and the casing 21 can be effectively realized.

Optionally, the second separating body 262 of the separating member 26 is provided with a through-hole 2621 corresponding to the connecting part 2521 of the second connecting body 252. The through-hole 2621 is configured for the connecting part 2521 to pass through, thus facilitating the connection between the electrode terminal 23 and the connecting part 2521 of the second connecting body 252.

In some embodiments, the material of the separating member 26 can be insulating material, thereby allowing the separating member 26 to separate the current collector component 25 from the casing 21 and at the same time to achieve an insulating isolation between the current collector component 25 and the casing 21. That is to say, the separating member 26 enables no electrical connection to be formed between the current collector component 25 and the casing 21. Adopting this structure effectively reduces the risk of short circuits between the current collector component 25 and the casing 21, thus enhancing the safety of the battery cell 20.

Exemplarily, the material of the separating member 26 can be rubber, plastic, or silicone, among other materials.

By arranging a separating member 26 between the current collector component 25 and the casing 21, it is enabled that the separating member 26 serves to separate the current collector component 25 from the casing 21, thus providing a certain level of protection for the current collector component 25. This reduces the risk of collisions between the current collector component 25 and the casing 21, thus enhancing the lifespan of the battery cell 20.

According to some embodiments of the present disclosure, with reference to FIG. 4, FIG. 5, and FIG. 7, the battery cell 20 comprises the two electrode terminals 23. Both of the two electrode terminals 23 are arranged on the peripheral wall 211, and the two electrode terminals 23 have opposite polarities.

The two electrode terminals 23 have opposite polarities, meaning one of the two electrode terminals 23 is configured to output the positive electrode of the battery cell 20, while the other electrode terminal 23 is configured to output the negative electrode of the battery cell 20.

In FIG. 4, along the extension direction X of the peripheral wall, both ends of the electrode assembly 22 are provided with tabs 221, a positive electrode tab, and a negative electrode tab, respectively, serving as a positive output and a negative output of the electrode assembly 22. Correspondingly, there are two current collector components 25 and two separating members 26. Each current collector component 25 is configured to connect one tab 221 and one electrode terminal 23, and each separating member 26 is configured to be arranged between one current collector component 25 and the casing 21.

In some embodiments, as shown in FIG. 5, both two electrode terminals 23 are arranged on the second portion 2113 of the peripheral wall 211 and are located on two different side walls 2114 of the second portion 2113. However, in other embodiments, both two electrode terminals 23 can also be arranged on the first portion 2112 of the peripheral wall 211, or it is possible that the first portion 2112 and the second portion 2113 of the peripheral wall 211 are each provided with one electrode terminal 23, respectively.

By arranging two electrode terminals 23 of the battery cell 20 with opposite polarities on the peripheral wall 211 of the casing 21, it is advantageous to further save the size of the battery cell 20 in its axial direction to save space occupied by the battery cell 20, thereby increasing the energy density of the battery cell 20 and enhancing the performance of the battery cell 20.

According to some embodiments of the present disclosure, as shown in FIG. 2, the embodiments of the present disclosure provide a battery 100, wherein the battery 100 comprises multiple battery cells 20 arranged of any of the above embodiments.

The multiple battery cells 20 can be connected in series with each other, they can be connected in parallel, or they can be connected in hybrid, wherein the hybrid connection means that the multiple battery cells 20 are connected both in series and in parallel.

Optionally, the battery 100 can also be provided with a box 10, wherein the multiple battery cells 20 are all contained within the box 10.

According to some embodiments of the present disclosure, with reference to FIG. 2, and with further reference to FIG. 11, FIG. 11 is a top view of multiple battery cells 20 interconnected as provided in some embodiments of the present disclosure. The electrode terminals 23 of two adjacent battery cells 20 are pressed against each other to realize the electrical connection between the two battery cells 20.

The multiple battery cells 20 are arranged in row and column. In other words, the multiple battery cells 20 comprise several rows of battery cells 20, with each row of the battery cells 20 comprising multiple battery cells 20. In each row of the battery cells 20, two adjacent battery cells 20 are pressed against each other, allowing the electrode terminals 23 of the adjacent battery cells 20 to abut with each other. Therefore, the multiple battery cells 20 in each row of the battery cells 20 are connected in series with each other. Of course, the battery 100 can also be provided with a busbar component. The busbar component is configured to connect two adjacent rows of the battery cells 20, thus achieving an electrical connection between multiple rows of the battery cells 20. Consequently, a hybrid connection of the multiple battery cells 20 can be achieved.

It should be noted that each battery cell 20 is provided with two electrode terminals 23 with opposite polarity: a positive electrode terminal as the positive output terminal of the battery cell 20 and a negative electrode terminal as the negative output terminal of the battery cell 20. In two adjacent battery cells 20, the positive electrode terminal of one battery cell 20 is pressed against the negative electrode terminal of the other battery cell 20, thus enabling a series connection between the multiple battery cells 20.

In some embodiments, the electrode terminals 23 of the two adjacent battery cells 20 can be welded or bonded to each other. In other words, after the electrode terminals 23 of the two adjacent battery cells 20 are pressed against each other, welding or bonding processes can be used to ensure a mutual welding or bonding between the electrode terminals 23 of the two adjacent battery cells 20. This enhances the tightness and reliability of the connection between the electrode terminals 23 of the two adjacent battery cells 20, effectively reducing contact resistance, and thus improving the performance and lifespan of the battery 100.

When multiple battery cells 20 are stacked together as a group, the electrode terminals 23 on the peripheral wall 211 of two adjacent battery cells 20 can be pressed against each other to realize the electrical connection among the multiple battery cells 20, thus eliminating the need for connecting busbar components among multiple battery cells 20. It is advantageous to reduce the difficulty of assembling the multiple battery cells 20, enhance the efficiency of grouping the multiple battery cells 20, contribute to saving internal space within the battery 100, and thus increase the energy density of the battery 100. In addition, as the two adjacent battery cells 20 are pressed against each other by the electrode terminals 23, a gap exists between the casings 21 of the two adjacent battery cells 20, so that a certain expansion space can be provided for the battery cells 20 in the process of use, which in turn is conducive to improving the dynamics performance of the battery 100.

According to some embodiments of the present disclosure, the embodiments of the present disclosure provide an electric device, comprising a battery 100 of any of the above solutions, and the battery 100 is configured to provide electrical energy to the electric device.

The electric device can be any of the above-mentioned devices or systems that apply the battery 100.

According to some embodiments of the present application, referring to FIGS. 3 to 10, the present disclosure provides a battery cell 20, wherein the battery cell 20 comprises a casing 21, an electrode assembly 22, two electrode terminals 23, two current collector components 25, and two separating members 26. The casing 21 comprises a peripheral wall 211 and two end walls 212, wherein the peripheral wall 211 is arranged around the end wall 212 and the peripheral wall 211 is a hexagonal prism structure. Along an extension direction X of the peripheral wall, the two end walls 212 are arranged at the two ends of the peripheral wall 211, respectively. The peripheral wall 211 comprises a first portion 2112 and a second portion 2113 which are separately arranged. The first portion 2112 and the second portion 2113 are arranged along a first direction Y. The first direction Y is perpendicular to the extension direction X of the peripheral wall. Along extension direction X of the peripheral wall, the two end walls 212 are each connected to the two ends of the first portion 2112; and the first portion 2112 and the two end walls 212 form an integrally molded structure. The two end walls 212, together with the first portion 2112, define an accommodating space 213 with an opening 214, wherein the accommodating space 213 is configured to accommodate the electrode assembly 22. The second portion 2113 is capped over the opening 214, and both two electrode terminals 23 are insulated and mounted on the second portion 2113 of the peripheral wall 211. The electrode assembly 22 comprises a main body part 222 and two tabs 221. Along the extension direction X of the peripheral wall, the two tabs 221 protrude from two ends of the main body part 222, respectively. Each current collector component 25 is connected to one tab 221 and one electrode terminal 23 for electrically connecting the electrode terminal 23 to the tab 221. The current collector component 25 comprises a first connecting body 251 and a second connecting body 252 which are mutually connected. Along the extension direction X of the peripheral wall, the first connecting body 251 is located between the end wall 212 and the corresponding tab 221 and is connected to the tab 221, and the second connecting body 252 is located between the main body part 222 and the peripheral wall 211 and is connected to the corresponding electrode terminal 23. The two separating members 26 are separately arranged between the casing 21 and one current collector component 25 to separate the casing 21 from the corresponding current collector component 25. The material of the separating member 26 is an insulating material.

It should be noted that, without conflict, the embodiments and features described in the embodiments of the present disclosure can be combined with each other.

The above are only preferred embodiments of the present disclosure, which is not intended to limit, and the present disclosure can have various changes and variations for those skilled in the art. Any modification, equivalent substitution, improvement, etc. made within the spirit and principles of the present disclosure shall be included in the scope of protection of the present disclosure.

## Claims

1. A battery cell, comprising:
a casing, comprising a peripheral wall and an end wall, wherein the peripheral wall is arranged around the end wall; along an extension direction of the peripheral wall, at least one end of the peripheral wall is provided with the end wall;
an electrode assembly, housed within the casing; and
an electrode terminal, arranged on the peripheral wall, wherein the electrode terminal is electrically connected to the electrode assembly.

2. The battery cell according to claim 1, wherein the peripheral wall comprises a first portion and a second portion which are separately arranged; the first portion and the second portion are arranged along a first direction and are interconnected to jointly accommodate the electrode assembly; and the first direction is perpendicular to the extension direction of the peripheral wall.

3. The battery cell according to claim 2, wherein along the extension direction of the peripheral wall, both ends of the peripheral wall are provided with the end wall; two end walls are connected to the first portion, respectively; the two end walls, together with the first portion, define an accommodating space with an opening; the accommodating space is configured for accommodating the electrode assembly; and the second portion is capped over the opening.

4. The battery cell according to claim 3, wherein the first portion and the two end walls are an integrally molded structure.

5. The battery cell according to claim 3 or 4, wherein the electrode terminal is arranged on the second portion.

6. The battery cell according to any one of claims 1 to 5, wherein the peripheral wall is a polygonal prism.

7. The battery cell according to claim 6, wherein the peripheral wall is a hexagonal prism.

8. The battery cell according to any one of claims 1 to 7, wherein the battery cell further comprises:
a current collector component, arranged inside the casing, wherein the current collector component is connected to the electrode assembly and the electrode terminal, to achieve an electrical connection between the electrode assembly and the electrode terminal.

9. The battery cell according to claim 8, wherein the electrode assembly comprises:
a main body part; and
a tab, wherein along the extension direction of the peripheral wall, the tab protrudes from one end of the main body part, wherein
the current collector component comprises a first connecting body and a second connecting body which are mutually connected; along the extension direction of the peripheral wall, the first connecting body is located between the end wall and the tab and is connected to the tab,
and the second connecting body is located between the main body part and the peripheral wall and is connected to the electrode terminal.

10. The battery cell according to claim 9, wherein a connecting part protrudes from a side of the second connecting body facing the electrode terminal, and the connecting part is connected to the electrode terminal.

11. The battery cell according to any one of claims 8 to 10, wherein the battery cell further comprises:
a separating member, wherein the separating member is arranged between the current collector component and the casing, so as to separate the current collector component from the casing.

12. The battery cell according to any one of claims 1 to 7, wherein the battery cell comprises:
two electrode terminals, both arranged on the peripheral wall, wherein the two electrode terminals have opposite polarities.

13. A battery, comprising multiple battery cells according to any one of claims 1 to 12.

14. The battery according to claim 13, wherein electrode terminals of two adjacent battery cells are pressed against each other to realize an electrical connection between the two battery cells.

15. An electric device, comprising the battery according to claim 13 or 14, wherein the battery is configured to provide an electrical energy.
